# FASCICULE DE BREVET EUROPEEN

(11) **EP 4 323 205 B1**
(45) Date de publication et mention de la délivrance du brevet: **01.01.2025**
(21) Numéro de dépôt: 22722854.1
(22) Date de dépôt: 11.04.2022
(51) Int. Cl.: B60C 15/00, B60C 9/00, B60C 9/04

(54) **ARCHITECTURE OPTIMISÉE D'UN PNEUMATIQUE DE TYPE GÉNIE CIVIL**
OPTIMIERTE ARCHITEKTUR EINES TIEFBAUREIFENS
OPTIMISED ARCHITECTURE OF A CIVIL ENGINEERING TYRE

(30) Priorité: 15.04.2021 FR 2103881
(43) Date de publication de la demande: 21.02.2024
(73) Titulaire: COMPAGNIE GENERALE DES ETABLISSEMENTS MICHELIN, 63000 Clermont-Ferrand (FR)
(72) Inventeur: LICENSE, William, 63040 CLERMONT-FERRAND CEDEX 9 (FR); BARBARIN, François, 63040 CLERMONT-FERRAND CEDEX 9 (FR)
(74) Mandataire: M.F.P. Michelin
(86) Numéro de dépôt international: PCT/FR2022/050679
(87) Numéro de publication internationale: WO 2022/219277

(56) Documents cités:
- WO-A1-2009/092648
- WO-A1-2018/011507
- FR-A1- 2 366 945

## Description

La présente invention a pour objet un pneumatique radial, destiné à équiper un véhicule lourd de type génie civil et concerne plus particulièrement l'armature de carcasse d'un tel pneumatique.

Les pneumatiques radiaux destinés à équiper un véhicule lourd de type génie civil, sont désignés au sens de la norme de la « European Tyre and Rim Technical Organisation » ou ETRTO - Organisation technique européenne du pneu et de la jante.

Par exemple un pneumatique radial pour véhicule lourd de type génie civil, au sens de la norme de la « European Tyre and Rim Technical Organisation » ou ETRTO, est destiné à être monté sur une jante dont le diamètre est au moins égal à 25 pouces. Bien que non limitée à ce type d'application, l'invention est décrite pour un pneumatique radial de grande dimension destiné à être monté sur un dumper, notamment des véhicules de transport de matériaux extraits de carrières ou de mines de surface, par l'intermédiaire d'une jante dont le diamètre est au moins égal à 35 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale, un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil, comprend habituellement une couche de carcasse comprenant des renforts, ou éléments de renforcement, généralement métalliques enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 80° et 90°.

L'armature de sommet d'un pneumatique radial pour véhicule de type génie civil, comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

L'armature de carcasse est un facteur limitant de l'usage des pneumatiques de Génie Civil, soit d'un point de vue de la charge maximale soit d'un point de vue de la pression. Un lien existe entre la pression interne du pneumatique et sa charge maximale. Plus la pression est élevée plus la charge maximale est élevée. Par ailleurs plus la pression est élevée plus le pneumatique est rigide moins il peut se déformer pour absorber les chocs. Plus la pression est élevée plus les câbles des couches de carcasse doivent être de large diamètre, éloignant les torons les plus distants de la fibre neutre, ce qui nuit grandement à leur résistance à la fatigue. Plus la pression est faible, plus les flancs fléchissent sous la charge et plus la couche de carcasse est soumise à de la flexion. Par ailleurs augmenter la pression et augmenter le diamètre des câbles, implique d'utiliser des câbles fabriqués à partir de fils unitaires de plus gros diamètres que les fils unitaires optimaux pour la résistance à la fatigue, et ce en raison de la difficulté de fabriquer des câbles avec un nombre très important de fils métalliques unitaires.

La divulgation des documents WO 2018/011507 A1 et FR 2 366 945 A1 est utile pour comprendre l'invention.

Les inventeurs se sont donnés pour objectif, pour un pneumatique radial pour véhicule de type génie civil, d'augmenter sa capacité de charge de 25%, par rapport à sa charge nominale, à une pression de gonflage égale à sa pression nominale, ou de pouvoir pour une même charge diminuer la pression de gonflage, sous une charge égale à sa charge nominale afin d'augmenter la résistance au choc sommet du pneumatique.

Cet objectif a été atteint, selon l'invention, par un pneumatique à armature de carcasse radiale pour véhicule de type génie civil comprenant :
- une armature de sommet, radialement intérieure à une bande de roulement, ladite bande de roulement étant réunie par l'intermédiaire de deux flancs, à deux bourrelets,
- une armature de carcasse s'étendant entre les deux bourrelets et constituée de deux couches de carcasse comportant des renforts métalliques formant un angle, avec une direction radiale, compris entre -10° et 10°,
- une première couche de carcasse, la plus radialement intérieure, étant ancrée dans chacun des bourrelets par retournement autour d'une tringle ayant un centre géométrique et une hauteur radiale Ht, pour former une partie principale s'étendant d'une tringle à l'autre, et un retournement, axialement extérieur à la partie principale dans chacun des bourrelets, et ayant une extrémité libre,
- la première couche de carcasse étant d'une hauteur radiale Hdc, mesurée de son point le plus radialement intérieur à son point le plus radialement extérieur,
- une seconde couche de carcasse s'étendant d'un bourrelet à l'autre et étant radialement extérieure à la première couche de carcasse dans une zone du sommet du pneumatique, la distance de la deuxième couche de carcasse à la partie principale de la première couche de carcasse étant mesurée entre les fibres neutres de la deuxième couche de carcasse et de la partie principale de la première couche de carcasse,
- chaque extrémité libre de chaque retournement de la première couche de carcasse, dans chaque bourrelet, étant à une distance radiale du point le plus radialement extérieur de la tringle au moins égale à 1 fois et au plus égale à 2 fois la hauteur radiale Ht de la tringle,
- dans chaque bourrelet, l'extrémité de la seconde couche de carcasse étant radialement intérieure au centre géométrique de la tringle,
- dans chaque bourrelet, depuis l'extrémité libre du retournement de la première couche de carcasse jusqu'au point de la première couche de carcasse distant du point le plus radialement intérieur de la première couche de carcasse d'une distance radiale égale à 85% de la hauteur radiale de la première couche de carcasse, la distance entre la partie principale de la première couche de carcasse et la seconde couche de carcasse étant au moins égale à 2 fois et au plus égale à 11 fois le diamètre des renforts métalliques de la première couche de carcasse,
- les renforts métalliques des deux couches de carcasse étant des câbles composés de fils unitaires dont les diamètres sont au moins égaux à 0.17mm et au plus égaux à 0.23mm pour au moins 50% de ces fils unitaires, et au moins égaux à 0.17mm et au plus égaux à 0.26mm pour la totalité de ces fils unitaires.

L'invention consiste en un pneumatique radial de Génie civil comprenant deux couches de carcasse métalliques. Cette solution est complexe à mettre en oeuvre étant donné la nécessité d'employer des câbles métalliques pour supporter les sollicitations de ce type d'usage et la complexité à régler la tenue à la fatigue de l'armature de carcasse notamment dans les zones de flexion des flancs et des bourrelets. En effet une solution avec deux couches de carcasse permet de faire fonctionner les flancs comme une poutre avec le désavantage que les deux couches sont de part et d'autre de la fibre neutre des flancs. Selon les zones du flanc et leur mode de flexion, le type de sollicitation varie entre les deux couches de carcasse. La première couche de carcasse la plus radialement intérieure est relativement en extension et la seconde couche de carcasse relativement en compression juste au-dessus du crochet de jante par exemple. La première couche de carcasse la plus radialement intérieure est relativement en compression et la seconde couche de carcasse relativement en extension au niveau du point le plus axialement extérieur du pneumatique et du point de jonction entre le flanc et le sommet du pneumatique. Entre ces zones claires de modes de fonctionnement les sollicitations peuvent être relativement équilibrées.

Or il est très compliqué de maintenir une couche de carcasse métallique performante dans des sollicitations en compression. Aussi une solution à deux couches de carcasse de part et d'autre de la fibre neutre n'a-t-elle pas été considérée comme réalisable dans les pneumatiques de Poids-lourd ou de Génie Civil dont la dimension de la jante est supérieure à 19 pouces. En effet ces pneumatiques ne sauraient en raison de leurs utilisations techniques, utiliser pour leurs couches de carcasse d'autres renforts que métalliques. Néanmoins et étonnamment, il est possible de réaliser une telle invention pour des pneumatiques Génie Civil qui améliore l'endurance du pneumatique, ou permette une augmentation de la charge pour la même pression d'utilisation ou une diminution de pression pour une même charge maximale. Ceci est réalisable en raison de la dimension des câbles de l'unique couche de carcasse des pneumatiques selon d'état de l'art. Ces renforts sont de gros diamètres et ont une faible souplesse, ce qui les pénalisent dans leur résistance à la flexion.

Selon l'invention les deux couches de carcasse ont des renforts de plus faible diamètre qui sont composés de fils métalliques unitaires de diamètre compris entre 0,17 et 0.23 mm dont les comportements en flexion sont optimisés dans ce type de pneumatiques. Le fait d'avoir deux couches de carcasse permet de diminuer le diamètre des renforts utilisés de 30% à 50% selon le pas utilisé pour les couches de carcasse. En effet les renforts de diamètres inférieurs sont naturellement plus souples en raison de la diminution de l'inertie de section mais peuvent aussi être disposés selon un pas plus faible. La souplesse augmentée des renforts selon l'invention compense largement la création d'une fibre neutre entre les deux couches de carcasse pour peu que les distances entre les couches de carcasse dans le flanc soient correctement dimensionnées et les extrémités des couches de carcasse soient positionnées de telle sorte que les risques de fissuration qu'elles provoquent soient maîtrisés.

Une première règle est que l'extrémité libre du retournement de la première couche de carcasse soit dans une zone du pneumatique sans compression et radialement extérieure au point le plus radialement extérieur de la tringle afin de prévenir le déroulement de la première couche de carcasse en cas de surchauffe du bourrelet. La hauteur radiale de la tringle Ht est mesurée sur une coupe méridienne depuis son ou ses points les plus radialement intérieurs à son ou ses points les plus radialement extérieurs. L'extrémité libre du retournement de la première couche de carcasse doit être à une distance radiale du point le plus radialement extérieur de la tringle au moins égale à 1 fois et au plus égale à 2 fois la hauteur radiale Ht de la tringle.

L'extrémité de la seconde couche de carcasse doit se situer dans une zone où, de préférence, les déformations sont très faibles voire nulles. Cette condition est réalisée si l'extrémité de la seconde couche de carcasse est radialement intérieure au centre géométrique de la tringle. Le centre géométrique de la tringle sera considéré comme étant l'intersection des diagonales du plus petit rectangle contenant la tringle. De préférence l'extrémité de la seconde couche de carcasse est radialement intérieure au point le plus radialement intérieur de la tringle. De préférence, pour éviter la fissuration des mélanges caoutchouteux sous la tringle, l'extrémité de la seconde couche de carcasse est axialement intérieure au centre géométrique de la tringle. De préférence, si les points les plus radialement intérieurs de la tringle constituent un segment ou base, alors il est avantageux que l'extrémité de la seconde couche de carcasse ne se situe pas à l'aplomb de cette base. En effet même si il y a peu de déplacement dans cette zone, l'effort de compression à l'aplomb de la base est maximal et particulièrement au milieu de cette base. Cet effort de compression a la capacité de déstructurer l'extrémité des renforts de la seconde couche de carcasse. Le risque est alors élevé qu'un des fils unitaires perce les mélanges caoutchouteux jusqu'à l'extérieur du pneumatique créant ainsi une voie d'infiltration d'eau, source d'oxydation de la tringle ou de la seconde couche de carcasse pouvant conduire à une baisse de la performance en endurance du pneumatique. On préfèrera alors que l'extrémité de la seconde couche de carcasse soit axialement extérieure au point le plus axialement extérieur de la base de la tringle ou axialement intérieure au point le plus axialement intérieur de la base de la tringle et plus particulièrement axialement extérieure ou axialement intérieure au point milieu de la base de la tringle. La configuration où l'extrémité de la seconde couche de carcasse est axialement intérieure au point le plus axialement intérieur de la base de la tringle, a l'avantage de maximiser la performance de la tenue du bourrelet au déroulement des couches de carcasses, celles-ci étant bloquées par la base de la tringle.

Pour que l'invention fonctionne, il est nécessaire de régler la distance entre les deux couches de carcasse entre l'extrémité libre du retournement de la première couche de carcasse et la jonction entre le flanc et le sommet. Dans le cas des pneumatiques de Génie Civil, cette jonction se trouve à un point situé à une distance radiale du point le plus radialement intérieur de la couche de carcasse égale à 85% de la hauteur radiale de la première couche de carcasse Hdc mesurée sur une coupe méridienne positionnée conformément à une enveloppe montée sur la jante nominale. Pour réduire au maximum les problèmes de flexion et de la position relative des couches de carcasse par rapport à la fibre neutre, une solution aurait été de rapprocher au mieux les deux couches de carcasse, mais étonnamment cette solution n'amène pas d'amélioration notable. En revanche, un ajustement particulier des distances entre les deux couches de carcasse le long du flanc du pneumatique permet de trouver une solution au problème posé, à condition d'utiliser des câbles aux diamètres plus petits et donc plus flexibles que ceux utilisés pour une solution ne comprenant qu'une seule couche de carcasse. Cette condition est réalisée avec des fils unitaires dont le diamètre est compris entre 0.17 mm et 0.23 mm pour au moins 50% de ces fils unitaires, et au moins égaux à 0.17mm et au plus égaux à 0.26mm pour la totalité de ces fils unitaires. De préférence les renforts métalliques des deux couches de carcasse (1, 3) sont des câbles composés de fils unitaires dont les diamètres sont pour au moins 60% de ces fils unitaires, au moins égaux à 0.17mm et au plus égaux à 0.2 mm.

Pour un pneumatique ayant une pression nominale P, il est possible de relier le diamètre des câbles des couches de carcasse à la dimension du pneumatique. Pour une armature de carcasse composée de deux couches de carcasse, le pneumatique selon l'invention a :
- une pression nominale P en bars
- un diamètre d des renforts métalliques des couches de carcasses en mm,
- une distance radiale R13 du point le plus radialement intérieur de la première couche de carcasse à l'axe de rotation du pneumatique en mm,
- une distance radiale R14 du point le plus radialement extérieur de la première couche de carcasse à l'axe de rotation du pneumatique en mm,
alors le produit Q étant égal à (R14-R13)*(3R14+R13)/8 en mm², le quotient 1000*d*R13/(P*Q) est au moins égal à 0.25 et au plus égal à 0.6. La limite inférieure permet que l'armature de carcasse soit suffisamment résistante à la pression interne mais également en fatigue. La limite supérieure permet de réaliser des pneumatiques avec des renforts métalliques dans les couches de carcasse dont les diamètres sont significativement inférieurs - entre 30 et 50% - aux diamètres des câbles pour une couche de carcasse unique des pneumatiques selon l'état de l'art. Il est ensuite possible d'ajuster les performances en endurance en jouant sur le pas des renforts métalliques. Limiter le diamètre des câbles permet de limiter la masse du pneumatique et la consommation de matière première. Utiliser des câbles aux diamètres plus faibles permet également de gagner en efficacité industrielle. En effet, ces câbles aux diamètres plus faibles sont plus faciles à fabriquer, à couper, à manipuler, à poser.

Les essais ont montré qu'un compromis de performance était acceptable si entre l'extrémité libre du retournement de la première couche de carcasse et le point de la première couche de carcasse distant du point le plus radialement intérieur de la première couche de carcasse d'une distance radiale égale à 85% de la hauteur radiale Hdc de la première couche de carcasse, la distance entre la première couche de carcasse et la seconde couche de carcasse est au moins égale à 2 et au plus égale à 11 fois le diamètre des renforts métalliques de la première couche de carcasse, de préférence au moins égale à 3 et au plus égale à 8 fois le diamètre des renforts métalliques de la première couche de carcasse.

La distance entre les deux couches de carcasse est possiblement constante depuis l'extrémité libre du retournement de la première couche de carcasse jusqu'à la jonction du flanc avec le sommet. Néanmoins pour une distance constante sur cette zone, certains points sont plus sollicités que d'autres et cette solution n'est pas optimale.

Une amélioration de l'invention est réalisée lorsque la distance DA entre la partie principale de la première couche de carcasse et la seconde couche de carcasse, mesurée à l'extrémité libre du retournement de la première couche de carcasse, est supérieure à la distance DB entre la première couche de carcasse et la seconde couche de carcasse, mesurée au point de la première couche de carcasse distant du point le plus radialement intérieur de la première couche de carcasse d'une distance radiale égale à 85% de la hauteur radiale Hdc de la première couche de carcasse. En effet, en raison de la présence du crochet de jante qui joue le rôle d'appui lors de la flexion, une distance plus importante au niveau du crochet de jante plutôt qu'à la liaison du flanc avec le sommet permet de favoriser la mise à plat de ce dernier en gardant une rigidité de flexion de flanc adéquate. Le risque de défaillance en fatigue est donc plus faible en cette zone. De ce fait, il est plus intéressant pour la tenue des gommes en cisaillement d'augmenter la distance séparant les deux couches de carcasse au niveau de l'extrémité libre du retournement de la première couche de carcasse qu'au niveau de la jonction du flanc avec le sommet.

Une autre amélioration de l'invention est réalisée lorsque la distance DA entre la partie principale de la première couche de carcasse et la seconde couche de carcasse mesurée à l'extrémité libre du retournement de la première couche de carcasse est supérieure à la distance DE entre la première couche de carcasse et la seconde couche de carcasse mesurée au point le plus axialement extérieur de la première couche de carcasse pour une raison similaire. Le point le plus axialement extérieur de la première couche de carcasse est le lieu d'un maximum de flexion et il convient d'y diminuer au maximum les efforts dus à l'éloignement des couches de carcasse à la fibre neutre.

Il est par ailleurs intéressant pour une bonne répartition des efforts de flexion sur la hauteur du flanc du pneumatique que la distance entre les couches de carcasse au niveau du point le plus axialement extérieur de la première couche de carcasse soit proche de la distance entre les couches de carcasse au niveau de la jonction du flanc avec le sommet. Cette condition est obtenue si la distance DE entre la première couche de carcasse et la seconde couche de carcasse mesurée au point le plus axialement extérieur de la première couche de carcasse, est au moins égale à 0.9 fois la distance DB entre la première couche de carcasse et la seconde couche de carcasse, mesurée au point de la première couche de carcasse distant du point le plus radialement intérieur de la première couche de carcasse d'une distance radiale égale à 85% de la hauteur radiale Hdc de la première couche de carcasse. De préférence, du point le plus axialement extérieur E de la première couche de carcasse au point B de la première couche de carcasse distant du point le plus radialement intérieur de la première couche de carcasse d'une distance radiale égale à 85% de la hauteur radiale Hdc de la première couche de carcasse, la distance entre la partie principale de la première couche de carcasse et la seconde couche de carcasse est au plus égale à 1.1 fois la distance DE entre la première couche de carcasse et la seconde couche de carcasse mesurée au point le plus axialement extérieur de la première couche de carcasse.

Entre l'extrémité libre du retournement de la première couche de carcasse dont la flexion s'effectue avec un centre de courbure à l'extérieur du pneumatique et le point le plus axialement extérieur de la première couche de carcasse où la flexion s'effectue autour d'un centre de courbure se situant à l'intérieur du pneumatique, il existe un point de fragilité où les contraintes de flexion changent de signe. Pour atténuer l'influence sur l'endurance de ce phénomène qui a lieu à proximité du point I de la première couche de carcasse situé à une distance de l'extrémité libre du retournement de la première couche de carcasse égale à 0.65 fois la distance entre l'extrémité libre du retournement de la première couche de carcasse et le point le plus axialement extérieur de la première couche de carcasse, il est pertinent de réduire la distance DI en ce point entre les deux couches de carcasse par rapport aux distances entre les couches de carcasse au niveau de l'extrémité libre du retournement de la première couche de carcasse et au niveau du point le plus axialement extérieur de la première couche de carcasse. Sachant qu'il est préférable que la distance entre les deux couches de carcasse à l'extrémité libre du retournement de la première couche de carcasse soit supérieure à la même distance au niveau du point le plus axialement extérieur de la première couche de carcasse, il est ainsi avantageux que la distance DI entre la première couche de carcasse et la seconde couche de carcasse mesurée au point I de la première couche de carcasse soit inférieure à la distance DE de la première couche de carcasse à la seconde couche de carcasse, mesurée au point le plus axialement extérieur de la première couche de carcasse.

Pour une conception optimale, il convient que la variation de la distance entre les deux couches de carcasse entre l'extrémité libre du retournement de la première couche de carcasse et la jonction entre le flanc et le sommet, soit comprise entre 1.5 et 4 fois le diamètre des câbles de la première couche de carcasse. Cette limitation de la variation permet d'éviter qu'une zone du flanc soit particulièrement rigidifiée par un fonctionnement de type poutre et une autre zone particulièrement souple. En effet une zone particulièrement souple reprendrait la plus grande partie de la flexion lors de la mise à plat du sommet et serait alors une zone de fragilité en endurance. Ainsi il est avantageux que la distance DA entre la partie principale de la première couche de carcasse et la seconde couche de carcasse mesurée à l'extrémité libre du retournement de la première couche de carcasse moins la distance minimale mesurée entre les deux couches de carcasse entre l'extrémité libre du retournement de la première couche de carcasse et le point de la première couche de carcasse distant du point le plus radialement intérieur de la couche de carcasse d'une distance radiale égale à 85% de la hauteur radiale Hdc de la première couche de carcasse, est au moins égale à 1.5 et au plus égale à 4 fois le diamètre des renforts métalliques de la première couche de carcasse.

Il est possible que les couches de carcasse aient des renforts métalliques différents néanmoins pour des raisons évidentes de standardisation, il est avantageux que les renforts métalliques des deux couches de carcasse soient identiques quant à leurs composants et leurs architectures.

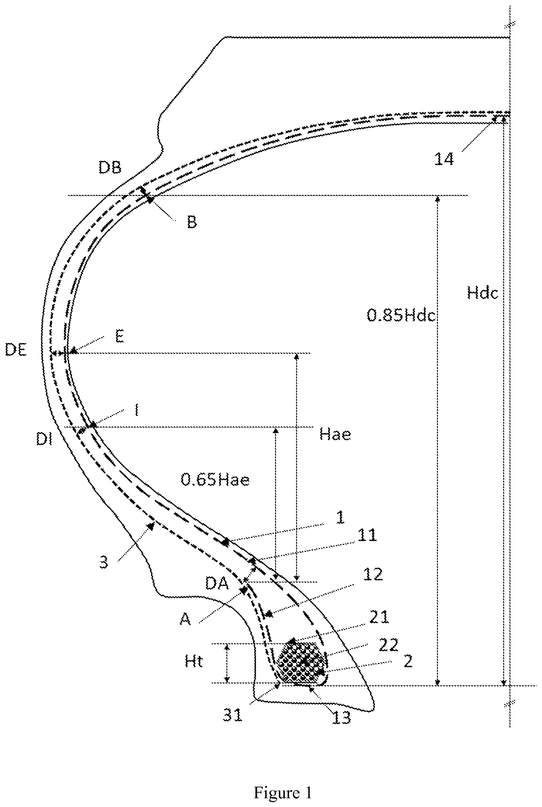

Les caractéristiques de l'invention sont illustrées par la figure 1 schématique et non représentée à l'échelle, en référence à un pneumatique de dimension 24.00R35.

Sur la figure 1, est représentée une demi-coupe méridienne d'un pneumatique pour véhicule lourd de type génie civil comprenant une armature de carcasse comprenant une première couche de carcasse 1 la plus radialement intérieure étant ancrée dans chaque bourrelet par un retournement autour de la tringle 2 et une seconde couche de carcasse 3. La première couche de carcasse 1 a une partie principale 11 s'étendant de la tringle 2 à l'autre tringle dans l'autre bourrelet et un retournement 12 ayant une extrémité libre A c'est-à-dire l'extrémité la plus radialement extérieure A. La première couche de carcasse a une hauteur radiale Hdc mesurée sur une coupe méridienne positionnée telle que montée sur une jante nominale, entre le point le plus radialement intérieur 13 de la première couche de carcasse situé sous la tringle 2 et le point le plus radialement extérieur 14 de la première couche de carcasse situé dans le sommet habituellement au niveau du plan équateur du pneumatique. A une distance radiale égale à 85% de Hdc du point le plus radialement intérieur 13 de la première couche de carcasse 1, se trouve le point B de jonction entre le sommet et le flanc. Le point E désigne le point le plus axialement extérieur de la première couche de carcasse sur une coupe méridienne positionnée telle que montée sur une jante nominale. Hae est la distance radiale entre le point A et le point E. Le point I désigne le point de la première couche de carcasse situé à une distance radiale du point A égale à 0.65 fois Hae. Les points A, B, E, I sont pris sur la ligne médiane de la première couche de carcasse. A chacun de ces points est associé une distance D, respectivement DA, DB, DE, DI, de la ligne médiane de la partie principale 11 de la première couche de carcasse 1 à la ligne médiane de la seconde couche de carcasse 3. La tringle 2 a une hauteur radiale Ht mesurée entre son point le plus radialement intérieur et son point le plus radialement extérieur 21. Le point 22 est le centre géométrique de la tringle, correspondant au centre du plus petit rectangle contenant la tringle dans la coupe méridienne. L'extrémité 31 la plus radialement intérieure de la seconde couche de carcasse 3 est radialement intérieure au centre géométrique de la tringle. L'extrémité libre A du retournement de la première couche de carcasse est à une distance radiale du point le plus radialement extérieur 21 de la tringle 2 comprise entre une et deux fois la hauteur radiale Ht. Pour tous les points de la première couche de carcasse compris entre le point A et le point B, la distance de la première couche de carcasse à la seconde couche de carcasse est comprise entre 2 et 11 fois le diamètre du renfort métallique de la première couche de carcasse. De plus DA est supérieure à DE et DB, DE est au moins égale à 0.9 fois DB et DI est inférieure à DE. La variation de la distance entre les deux couches de carcasse entre le point A et le point B est comprise entre 1.5 et 4 fois le diamètre des renforts métalliques de la première couche de carcasse.

L'invention a été testée sur des pneumatiques de dimension 24.00R35. Les pneumatiques selon l'invention sont comparés à des pneumatiques de référence de même dimension pour chacun des tests.

Les pneumatiques de référence comprennent une unique couche de carcasse dont les renforts métalliques sont des câbles de 7 torons comprenant 7 fils d'acier de 23 centièmes de 2.24 mm de diamètre disposés selon un pas de 2.6 mm sous la tringle.

Les pneumatiques selon l'invention comprennent deux couches de carcasse dont les renforts métalliques sont des câbles de 27 fils d'acier de 18 centièmes de millimètres 1.38 mm de diamètre disposés selon un pas de 1.8 mm. Les câbles du pneumatique de référence et du pneumatique selon l'invention sont frettés.

La distance DA, distance maximale entre les deux couches de carcasse entre A et B, est égale à 8 mm. La distance DB est égale à 4.4 mm, c'est la distance minimale entre les deux couches de carcasses entre les points A et B. La distance DI, distance minimale entre les deux couches de carcasse entre les points A et E est égale à 5.9 mm et la distance DE est égale à 6.4 mm. La distance entre les deux couches de carcasse entre A et B est bien comprise entre 2 et 11 fois le diamètre des renforts métalliques de la première couche de carcasse. DA-DB est bien comprise entre 1.5 et 4 fois le diamètre des renforts métalliques de la première couche de carcasse.

Les autres composants des pneumatiques témoins et selon l'invention, architecture sommet, mélange caoutchouteux... sont identiques.

. Les pneumatiques sont testés sur machine. Ils sont préalablement rabotés jusqu'au fond de sculpture afin de concentrer les sollicitations sur les flancs et les bourrelets. Le profil de la bande de roulement du pneumatique raboté correspondant au profil de la bande de roulement à neuf. Deux pneumatiques sont écrasés l'un sur l'autre avec un effort de 25 000 daN correspondant à la charge nominale plus 25% de surcharge à 6.2 bar de pression soit une pression inférieure de 1.05 bar à la pression nominale. Les pneumatiques roulent l'un sur l'autre à la vitesse de 15 km/h. Le pneumatique selon l'invention a effectué plus de 1000 h de roulage sans dommage quand le pneumatique selon l'état de l'art a été arrêté sur une cassure des mélanges de gomme dans le flanc au bout de 800h.

Ainsi l'invention amène bien une amélioration d'au moins 20% de la performance en endurance du flanc et du bourrelet pour un usage surchargé et sous gonflé.

## Revendications

1. Pneumatique à armature de carcasse radiale pour véhicule de type génie civil comprenant :
• une armature de sommet, radialement intérieure à une bande de roulement, ladite bande de roulement étant réunie par l'intermédiaire de deux flancs, à deux bourrelets,
• une armature de carcasse s'étendant entre les deux bourrelets et constituée de deux couches de carcasse (1, 3) comportant des renforts métalliques formant un angle, avec une direction radiale, compris entre -10° et 10°,
• une première couche de carcasse (1), la plus radialement intérieure, étant ancrée dans chacun des bourrelets par retournement autour d'une tringle (2) ayant un centre géométrique (22) et une hauteur radiale Ht, pour former une partie principale (11) s'étendant d'une tringle à l'autre, et un retournement (12), axialement extérieur à la partie principale (11) dans chacun des bourrelets, et ayant une extrémité libre (A),
• la première couche (1) de carcasse étant d'une hauteur radiale Hdc, mesurée de son point (13) le plus radialement intérieur à son point (14) le plus radialement extérieur,
• une seconde couche de carcasse (3) s'étendant d'un bourrelet à l'autre et étant radialement extérieure à la première couche de carcasse (1) dans une zone du sommet du pneumatique, la distance de la deuxième couche de carcasse (3) à la partie principale (11) de la première couche de carcasse (1) étant mesurée entre les fibres neutres de la deuxième couche de carcasse (3) et de la partie principale (11) de la première couche de carcasse (1),
• chaque extrémité libre (A) de chaque retournement (12) de la première couche de carcasse (1), dans chaque bourrelet, étant à une distance radiale du point le plus radialement extérieur (21) de la tringle au moins égale à 1 fois et au plus égale à 2 fois la hauteur radiale (Ht) de la tringle,
• dans chaque bourrelet, l'extrémité (31) de la seconde couche de carcasse (3) étant radialement intérieure au centre géométrique (22) de la tringle (2),
• **caractérisé en ce que,** dans chaque bourrelet, depuis l'extrémité libre (A) du retournement (12) de la première couche de carcasse (1) jusqu'au point (B) de la première couche de carcasse (1) distant du point (13) le plus radialement intérieur de la première couche de carcasse (1) d'une distance radiale égale à 85% de la hauteur radiale (Hdc) de la première couche de carcasse (1), la distance entre la partie principale (11) de la première couche de carcasse (1) et la seconde couche de carcasse (3) est au moins égale à 2 fois et au plus égale à 11 fois le diamètre des renforts métalliques de la première couche de carcasse (1),
• **et en ce que** les renforts métalliques des deux couches de carcasse (1,3) sont des câbles composés de fils unitaires dont les diamètres sont au moins égaux à 0.17mm et au plus égaux à 0.23mm pour au moins 50% de ces fils unitaires, et au moins égaux à 0.17mm et au plus égaux à 0.26mm pour la totalité de ces fils unitaires.

2. Pneumatique selon la revendication 1, **dans lequel** la distance DA entre la partie principale (11) de la première couche (1) de carcasse et la seconde couche (3) de carcasse, mesurée à l'extrémité libre (A) du retournement de la première couche (1) de carcasse, est supérieure à la distance DB entre la première couche (1) de carcasse et la seconde couche (3) de carcasse, mesurée au point (B) de la première couche (1) de carcasse distant du point (13) le plus radialement intérieur de la première couche de carcasse (1) d'une distance radiale égale à 85% de la hauteur radiale (Hdc) de la première couche de carcasse (1).

3. Pneumatique selon l'une des revendications 1 ou 2, **dans lequel** la distance DA entre la partie principale (11) de la première couche (1) de carcasse et la seconde couche (3) de carcasse mesurée à l'extrémité libre (A) du retournement (12) de la première couche (1) de carcasse est supérieure à la distance DE entre la première couche (1) de carcasse et la seconde couche (3) de carcasse mesurée au point (E) le plus axialement extérieur de la première couche (1) de carcasse.

4. Pneumatique selon l'une des revendications précédentes, **dans lequel** la distance (DE) entre la première couche (1) de carcasse et la seconde couche (3) de carcasse mesurée au point (E) le plus axialement extérieur de la première couche (1) de carcasse, est au moins égale à 0.9 fois la distance (DB) entre la première couche (1) de carcasse et la seconde couche (3) de carcasse, mesurée au point (B) de la première couche (1) de carcasse distant du point (13) le plus radialement intérieur de la première couche de carcasse (1) d'une distance radiale égale à 85% de la hauteur radiale (Hdc) de la première couche de carcasse (1).

5. Pneumatique selon l'une des revendications précédentes, un point I de la première couche (1) de carcasse se situant à une distance radiale de l'extrémité libre (A) du retournement (12) de la première couche (1) de carcasse égale à 0.65 fois la distance (Hae) entre l'extrémité libre (A) du retournement (12) de la première couche (1) de carcasse et le point (E) le plus axialement extérieur de la première couche (1) de carcasse, **dans lequel,** la distance (DI) entre la première couche (1) de carcasse et la seconde couche de carcasse (2) mesurée au point I de la première couche de carcasse est inférieure à la distance (DE) entre la première couche (1) de carcasse et la seconde couche (3) de carcasse, mesurée au point (E) le plus axialement extérieur de la première couche (1) de carcasse.

6. Pneumatique selon l'une des revendications précédentes, **dans lequel,** la distance (DA) entre la partie principale (11) de la première couche (1) de carcasse et la seconde couche (3) de carcasse mesurée à l'extrémité libre (A) du retournement (12) de la première couche (1) de carcasse moins la distance minimale mesurée entre les deux couches de carcasse (1, 3) entre l'extrémité libre (A) du retournement (12) de la première couche (1) de carcasse et le point (B) de la première couche de carcasse (1) distant du point (13) le plus radialement intérieur de la première couche de carcasse (1) d'une distance radiale égale à 85% de la hauteur radiale (Hdc) de la première couche de carcasse (1), est au moins égale à 1.5 et au plus égale à 4 fois le diamètre des renforts métalliques de la première couche (1) de carcasse.

7. Pneumatique selon l'une des revendications précédentes, **dans lequel,** dans chaque bourrelet, depuis l'extrémité libre (A) du retournement (12) de la première couche (1) de carcasse au point (B) de la première couche (1) de carcasse distant du point (13) le plus radialement intérieur de la première couche de carcasse (1) d'une distance radiale égale à 85% de la hauteur radiale (Hdc) de la première couche de carcasse (1), la distance de la première couche (1) de carcasse à la seconde couche (3) de carcasse est au moins égale à 3 et au plus égale à 8 fois le diamètre des renforts métalliques de la première couche (1) de carcasse.

8. Pneumatique selon l'une des revendications précédentes, **dans lequel** l'extrémité (31) de la seconde couche (3) de carcasse est radialement intérieure au point le plus radialement intérieur de la tringle (2).

9. Pneumatique selon l'une des revendications précédentes, ayant une pression nominale P en bar, un diamètre d des renforts métalliques des couches de carcasses en mm, une distance radiale R13 du point le plus radialement intérieur (13) de la première couche de carcasse à l'axe de rotation du pneumatique en mm, une distance radiale R14 du point le plus radialement extérieur (14) de la première couche de carcasse à l'axe de rotation du pneumatique en mm, **dans lequel,** le produit Q étant égal à (R14-R13)*(3R14+R13)/8 en mm², le quotient 1000*d*R13/(P*Q) est au moins égal à 0.25 et au plus égal à 0.6.

10. Pneumatique selon l'une des revendications précédentes, **dans** lequel les renforts métalliques des deux couches de carcasse (1, 3) sont des câbles composés de fils unitaires dont les diamètres sont pour au moins 60% de ces fils unitaires, au moins égaux à 0.17mm et au plus égaux à 0.2 mm.

## Patentansprüche

1. Reifen mit Radialkarkassenverstärkung für ein Erdbewegungsfahrzeug, umfassend:
• eine Gürtelverstärkung, radial innerhalb eines Laufstreifens, wobei der Laufstreifen über zwei Seitenwände mit zwei Wülsten verbunden ist,
• eine Karkassenverstärkung, die sich zwischen den beiden Wülsten erstreckt und aus zwei Karkassenlagen (1, 3) besteht, die metallische Festigkeitsträger beinhaltet, die einen Winkel mit einer radialen Richtung zwischen -10° und 10° bilden,
• wobei eine erste Karkassenlage (1), die radial innerste, in jedem der Wülste durch Umschlagen um einen Wulstkern (2) herum verankert ist, der einen geometrischen Mittelpunkt (22) und eine radiale Höhe Ht besitzt, um einen Hauptteil (11) zu bilden, der sich von einem Wulstkern zu dem anderen erstreckt, und einen Umschlag (12), axial außerhalb des Hauptteils (11) in jedem der Wülste und mit einem freien Ende (A),
• wobei die erste Karkassenlage (1) eine radiale Höhe Hdc, gemessen von ihrem radial innersten Punkt (13) bis zu ihrem radial äußersten Punkt (14), hat,
• wobei sich eine zweite Karkassenlage (3) von einem Wulst zu dem anderen erstreckt und radial außerhalb der ersten Karkassenlage (1) in einem Gürtelbereich des Reifens liegt, wobei der Abstand der zweiten Karkassenlage (3) zu dem Hauptteil (11) der ersten Karkassenlage (1) zwischen den neutralen Fasern der zweiten Karkassenlage (3) und des Hauptteils (11) der ersten Karkassenlage (1) gemessen wird,
• wobei jedes freie Ende (A) jedes Umschlags (12) der ersten Karkassenlage (1), in jedem Wulst, in einem radialen Abstand von dem radial äußersten Punkt (21) des Wulstkerns liegt, der mindestens das 1-Fache und höchstens das 2-Fache der radialen Höhe (Ht) des Wulstkerns beträgt,
• wobei in jedem Wulst das Ende (31) der zweiten Karkassenlage (3) radial innerhalb des geometrischen Mittelpunkts (22) des Wulstkerns liegt (2),
• **dadurch gekennzeichnet, dass** in jedem Wulst, von dem freien Ende (A) des Umschlags (12) der ersten Karkassenlage (1) bis zum dem Punkt (B) der ersten Karkassenlage (1), der von dem radial innersten Punkt (13) der ersten Karkassenlage (1) um einen radialen Abstand von 85 % der radialen Höhe (Hdc) der ersten Karkassenlage (1) entfernt ist, der Abstand zwischen dem Hauptteil (11) der ersten Karkassenlage (1) und der zweiten Karkassenlage (3) mindestens das 2-Fache und höchstens das 11-Fache des Durchmessers der metallischen Festigkeitsträger der ersten Karkassenlage (1) beträgt,
• und dadurch, dass die metallischen Festigkeitsträger der beiden Karkassenlagen (1, 3) Seile sind, die aus einzelnen Drähten zusammengesetzt sind, deren Durchmesser mindestens 0,17 mm und höchstens 0,23 mm bei mindestens 50 % dieser einzelnen Drähte und mindestens 0,17 mm und höchstens 0,26 mm bei der Gesamtheit dieser einzelnen Drähte betragen.

2. Reifen nach Anspruch 1, wobei der Abstand DA zwischen dem Hauptteil (11) der ersten Karkassenlage (1) und der zweiten Karkassenlage (3), gemessen an dem freien Ende (A) des Umschlags der ersten Karkassenlage (1), größer ist als der Abstand DB zwischen der ersten Karkassenlage (1) und der zweiten Karkassenlage (3), gemessen in dem Punkt (B) der ersten Karkassenlage (1), der von dem radial innersten Punkt (13) der ersten Karkassenlage (1) um einen radialen Abstand von 85 % der radialen Höhe (Hdc) der ersten Karkassenlage (1) entfernt ist.

3. Reifen nach einem der Ansprüche 1 oder 2, wobei der Abstand DA zwischen dem Hauptteil (11) der ersten Karkassenlage (1) und der zweiten Karkassenlage (3), gemessen an dem freien Ende (A) des Umschlags (12) der ersten Karkassenlage (1), größer ist als der Abstand DE zwischen der ersten Karkassenlage (1) und der zweiten Karkassenlage (3), gemessen in dem axial äußersten Punkt (E) der ersten Karkassenlage (1).

4. Reifen nach einem der vorhergehenden Ansprüche, wobei der Abstand (DE) zwischen der ersten Karkassenlage (1) und der zweiten Karkassenlage (3), gemessen in dem axial äußersten Punkt (E) der ersten Karkassenlage (1), mindestens das 0,9-Fache des Abstands (DB) zwischen der ersten Karkassenlage (1) und der zweiten Karkassenlage (3), gemessen in dem Punkt (B) der ersten Karkassenlage (1), der von dem radial innersten Punkt (13) der ersten Karkassenlage (1) um einen radialen Abstand von 85 % der radialen Höhe (Hdc) der ersten Karkassenlage (1) entfernt ist, beträgt.

5. Reifen nach einem der vorhergehenden Ansprüche, wobei ein Punkt I der ersten Karkassenlage (1) in einem radialen Abstand von dem freien Ende (A) des Umschlags (12) der ersten Karkassenlage (1) gelegen ist, der das 0,65-Fache des Abstands (Hae) zwischen dem freien Ende (A) des Umschlags (12) der ersten Karkassenlage (1) und dem axial äußersten Punkt (E) der ersten Karkassenlage (1) beträgt, wobei der Abstand (DI) zwischen der ersten Karkassenlage (1) und der zweiten Karkassenlage (2), gemessen im Punkt I der ersten Karkassenlage, geringer ist als der Abstand (DE) zwischen der ersten Karkassenlage (1) und der zweiten Karkassenlage (3), gemessen in dem axial äußersten Punkt (E) der ersten Karkassenlage (1).

6. Reifen nach einem der vorhergehenden Ansprüche, wobei der Abstand (DA) zwischen dem Hauptteil (11) der ersten Karkassenlage (1) und der zweiten Karkassenlage (3), gemessen an dem freien Ende (A) des Umschlags (12) der ersten Karkassenlage (1), abzüglich des kleinsten Abstands, gemessen zwischen den beiden Karkassenlagen (1, 3) zwischen dem freien Ende (A) des Umschlags (12) der ersten Karkassenlage (1) und dem Punkt (B) der ersten Karkassenlage (1), der von dem radial innersten Punkt (13) der ersten Karkassenlage (1) um einen radialen Abstand von 85 % der radialen Höhe (Hdc) der ersten Karkassenlage (1) entfernt ist, mindestens das 1,5- und höchstens das 4-Fache des Durchmessers der metallischen Festigkeitsträger der ersten Karkassenlage (1) beträgt.

7. Reifen nach einem der vorhergehenden Ansprüche, wobei in jedem Wulst, von dem freien Ende (A) des Umschlags (12) der ersten Karkassenlage (1) bis zu dem Punkt (B) der ersten Karkassenlage (1), der von dem radial innersten Punkt (13) der ersten Karkassenlage (1) um einen radialen Abstand von 85 % der radialen Höhe (Hdc) der ersten Karkassenlage (1) entfernt ist, der Abstand der ersten Karkassenlage (1) zu der zweiten Karkassenlage (3) mindestens das 3-Fache und höchstens das 8-Fache des Durchmessers der metallischen Festigkeitsträger der ersten Karkassenlage (1) beträgt.

8. Reifen nach einem der vorhergehenden Ansprüche, wobei das Ende (31) der zweiten Karkassenlage (3) radial innerhalb des radial innersten Punkts des Wulstkerns (2) liegt.

9. Reifen nach einem der vorhergehenden Ansprüche mit einem Nenndruck P in bar, einem Durchmesser d der metallischen Festigkeitsträger der Karkassenlagen in mm, einem radialen Abstand R13 des radial innersten Punkts (13) der ersten Karkassenlage zu der Rotationsachse des Reifens in mm, einem radialen Abstand R14 des radial äußersten Punkts (14) der ersten Karkassenlage zu der Rotationsachse des Reifens in mm, wobei, wenn das Produkt Q gleich (R14-R13)*(3R14+R13)/8 in mm² ist, der Quotient 1000*d*R13/(P*Q) mindestens 0,25 und höchstens 0,6 ist.

10. Reifen nach einem der vorhergehenden Ansprüche, wobei die metallischen Festigkeitsträger der beiden Karkassenlagen (1, 3) Seile sind, die aus einzelnen Drähten zusammengesetzt sind, deren Durchmesser bei mindestens 60 % dieser einzelnen Drähte mindestens 0,17 mm und höchstens 0,2 mm betragen.

## Claims

1. Radial carcass reinforcement tyre for a civil engineering vehicle, comprising:
• a crown reinforcement, radially on the inside of a tread, said tread being connected by two sidewalls to two beads,
• a carcass reinforcement extending between the two beads and made up of two carcass layers (1, 3) comprising metal reinforcers which, with a radial direction, make an angle of between -10° and 10°,
• a first carcass layer (1), the radially innermost one, being anchored in each of the beads by being turned up around a bead wire (2) having a geometric centre (22) and a radial height Ht, to form a main part (11) extending from one bead wire to the other, and a turn-up (12), axially on the outside of the main part (11) in each of the beads, and having a free end (A),
• the first carcass layer (1) having a radial height Hdc, measured from its radially innermost point (13) to its radially outermost point (14),
• a second carcass layer (3) extending from one bead to the other and being radially on the outside of the first carcass layer (1) in a crown region of the tyre, the distance from the second carcass layer (3) to the main part (11) of the first carcass layer (1) being measured between the neutral axes of the second carcass layer (3) and of the main part (11) of the first carcass layer (1),
• each free end (A) of each turn-up (12) of the first carcass layer (1) in each bead being at a radial distance from the radially outermost point (21) of the bead wire that is at least equal to 1 times and at most equal to 2 times the radial height (Ht) of the bead wire,
• in each bead, the end (31) of the second carcass layer (3) being radially on the inside of the geometric centre (22) of the bead wire (2),
• **characterized in that,** in each bead, from the free end (A) of the turn-up (12) of the first carcass layer (1) to the point (B) of the first carcass layer (1) that is distant from the radially innermost point (13) of the first carcass layer (1) by a radial distance equal to 85% of the radial height (Hdc) of the first carcass layer (1), the distance between the main part (11) of the first carcass layer (1) and the second carcass layer (3) is at least equal to 2 times and at most equal to 11 times the diameter of the metal reinforcers of the first carcass layer (1),
• **and in that** the metal reinforcers of the two carcass layers (1, 3) are cords made up of individual threads of which the diameters are at least equal to 0.17mm and at most equal to 0.23mm for at least 50% of these individual threads, and at least equal to 0.17mm and at most equal to 0.26mm for the entirety of these individual threads.

2. Tyre according to Claim 1, **wherein** the distance DA between the main part (11) of the first carcass layer (1) and the second carcass layer (3), measured at the free end (A) of the turn-up of the first carcass layer (1), is greater than the distance DB between the first carcass layer (1) and the second carcass layer (3), measured at that point (B) of the first carcass layer (1) that is distant from the radially innermost point (13) of the first carcass layer (1) by a radial distance equal to 85% of the radial height (Hdc) of the first carcass layer (1).

3. Tyre according to one of Claims 1 or 2, **wherein** the distance DA between the main part (11) of the first carcass layer (1) and the second carcass layer (3), measured at the free end (A) of the turn-up (12) of the first carcass layer (1), is greater than the distance DE between the first carcass layer (1) and the second carcass layer (3), measured at the axially outermost point (E) of the first carcass layer (1).

4. Tyre according to one of the preceding claims, **wherein** the distance (DE) between the first carcass layer (1) and the second carcass layer (3), measured at the axially outermost point (E) of the first carcass layer (1) is at least equal to 0.9 times the distance (DB) between the first carcass layer (1) and the second carcass layer (3), measured at that point (B) of the first carcass layer (1) that is distant from the radially innermost point (13) of the first carcass layer (1) by a radial distance equal to 85% of the radial height (Hdc) of the first carcass layer (1).

5. Tyre according to one of the preceding claims, a point I of the first carcass layer (1) being situated at a radial distance from the free end (A) of the turn-up (12) of the first carcass layer (1) that is equal to 0.65 times the distance (Hae) between the free end (A) of the turn-up (12) of the first carcass layer (1) and the axially outermost point (E) of the first carcass layer (1), **wherein** the distance (DI) between the first carcass layer (1) and the second carcass layer (2), measured at the point I of the first carcass layer, is less than the distance (DE) between the first carcass layer (1) and the second carcass layer (3), measured at the axially outermost point (E) of the first carcass layer (1).

6. Tyre according to one of the preceding claims, **wherein** the distance (DA) between the main part (11) of the first carcass layer (1) and the second carcass layer (3), measured at the free end (A) of the turn-up (12) of the first carcass layer (1), minus the minimum distance measured between the two carcass layers (1, 3) between the free end (A) of the turn-up (12) of the first carcass layer (1) and that point (B) of the first carcass layer (1) that is distant from the radially innermost point (13) of the first carcass layer (1) by a radial distance equal to 85% of the radial height (Hdc) of the first carcass layer (1), is at least equal to 1.5 and at most equal to 4 times the diameter of the metal reinforcers of the first carcass layer (1).

7. Tyre according to one of the preceding claims, **wherein,** in each bead, from the free end (A) of the turn-up (12) of the first carcass layer (1) to the point (B) of the first carcass layer (1) that is distant from the radially innermost point (13) of the first carcass layer (1) by a radial distance equal to 85% of the radial height (Hdc) of the first carcass layer (1), the distance from the first carcass layer (1) to the second carcass layer (3) is at least equal to 3 and at most equal to 8 times the diameter of the metal reinforcers of the first carcass layer (1).

8. Tyre according to one of the preceding claims, **wherein** the end (31) of the second carcass layer (3) is radially on the inside of the radially innermost point of the bead wire (2).

9. Tyre according to one of the preceding claims, having a nominal pressure P in bar, a diameter d of the metal reinforcers of the carcass layers in mm, a radial distance R13 from the radially innermost point (13) of the first carcass layer to the axis of rotation of the tyre in mm, a radial distance R14 from the radially outermost point (14) of the first carcass layer to the axis of rotation of the tyre in mm, **wherein,** if the product Q is equal to (R14-R13)*(3R14+R13)/8 in mm², then the quotient 1000*d*R13/(P*Q) is at least equal to 0.25 and at most equal to 0.6.

10. Tyre according to one of the preceding claims, **wherein** the metal reinforcers of the two carcass layers (1, 3) are cords made up of individual threads of which the diameters are, for at least 60% of these individual threads, at least equal to 0.17mm and at most equal to 0.2mm.
